# EUROPÄISCHE PATENTSCHRIFT

(11) **EP 3 096 060 B1**
(45) Veröffentlichungstag und Bekanntmachung des Hinweises auf die Patenterteilung: **16.01.2019**
(21) Anmeldenummer: 15167991.7
(22) Anmeldetag: 18.05.2015
(51) Int. Cl.: F16L 27/087, F16L 39/04

(54) **DRUCKMITTELZUFÜHRUNGSEINRICHTUNG**
PRESSURISED AGENT FEEDING DEVICE
DISPOSITIF D'ALIMENTATION D'UN FLUIDE SOUS PRESSION

(43) Veröffentlichungstag der Anmeldung: 23.11.2016
(73) Patentinhaber: MTH GbR Markus und Thomas Hiestand, 88630 Pfullendorf (DE)
(72) Erfinder: Hiestand, Karl, 88630 Pfullendorf (DE); Hiestand, Markus, 88630 Pfullendorf (DE)
(74) Vertreter: Riebling, Peter

(56) Entgegenhaltungen:
- EP-A1- 0 657 238
- DE-A1- 3 005 863
- US-A- 5 549 427

## Beschreibung

Die Erfindung bezieht sich auf eine Einrichtung zur Übertragung eines Mediums aus einem ersten ortsfesten Bauteil in ein rotierend antreibbares zweites Bauteil und von diesem in eine Servo-Einrichtung gemäß den Merkmalen des Oberbegriffs des Anspruchs 1.

Eine Einrichtung zur Übertragung eines flüssigen oder gasförmigen Mediums aus einem ersten ortsfesten Bauteil in ein zweites rotierend antreibbares Bauteil ist durch die EP 0667479 B1 bekannt. Das erste Bauteil ist bei dieser Ausgestaltung durch einen einteiligen Ring gebildet, der mittels mehrerer an den beiden Stirnflächen vorgesehene Dichtspalte sowie einer geneigt zur Längsachse verlaufenden Ringkammer und eine Sammelkammer mit dem zweiten Bauteil zusammenwirkt, um bei einer Druckmittelübertragung das erste Bauteil in einem Schwebezustand zu halten.

Abgesehen davon, dass diese bekannte Einrichtung nur bei einer einseitig beaufschlagbaren Servo-Einrichtung einsetzbar ist und der Anwendungsbereich somit in einem erheblichen Maße eingeschränkt wird, ist des Weiteren von Nachteil, dass bei einer Druckmittelübertragung über die seitlich vorgesehene Leckage aufnehmende Sammelkammer diese geöffnet wird und demnach Medium beiderseits teilweise ab- strömt und daher erhebliche Verluste in Kauf zu nehmen sind. Auch tritt, da zwischen den beiden Bauteilen keine Dichtungen vorgesehen sind, bei einer Druckmittelübertragung in einem erheblichen Maße Medium aus der Zuführungsleitung in den Druckraum über und von diesem wiederum in die Sammelkammer. Dies bedingt einen Druckabfall in der Zuführungsleitung und der an diese angeschlossene Servo-Einrichtung, so dass oftmals ein ausreichender Betriebsdruck nicht zur Verfügung steht und somit Störungen auftreten können. Auch sind bei einer eventuellen Abfrage Ungenauigkeiten in Kauf zu nehmen. Des Weiteren können durch die metallische Anlage der beiden Bauteile aneinander Beschädigungen, die zu einem Ausfall der Einrichtung führen können, auftreten.

Die US 5 549 427 A bildet den nächstliegenden Stand der Technik und offenbart eine Einrichtung zur Übertragung eines Druckmediums aus einem ortsfest abgestützten äußeren Bauteil in ein rotierend antreibbares inneres Bauteil, die ineinander angeordnet und mit einander zugeordneten Druckmittelkanälen versehen sind, wobei das äußere Bauteil unmittelbar oder über Zwischenglieder an einem Gehäuse einer Arbeitsmaschine und das innere Bauteil mit radialem Abstand zu dem äußeren Bauteil unmittelbar oder über Zwischenglieder wie eine Servoeinrichtung an einer in dem Gehäuse drehbar gelagerten Spindel befestigt sind, und wobei zwischen dem äußeren Bauteil und dem inneren Bauteil im Bereich der in diesen vorgesehenen und einander zugeordneten Druckmittelkanälen zum Ausgleich des radialen Abstandes jeweils ein als geschlossener Ring ausgebildetes drehfest gehaltenes Zwischenstück eingesetzt ist, das mit mindestens einem Kanal zur Verbindung eines Druckmittelkanals des äußeren Bauteils mit einem Druckmittelkanal des inneren Bauteils versehen ist und an einem der Bauteile, vorzugsweise dem inneren Bauteil, über jeweils zwei radial gerichtete Dichtungsspalte seitlich abgestützt und gegenüber dem anderen Bauteil verstellbar ist.

Aufgabe der Erfindung ist es, eine Druckzuführungseinrichtung nach Art der vorgenannten Ausgestaltung zu schaffen, die einfach in ihrer konstruktiven Ausgestaltung ist, aber dennoch eine äußerst zufriedenstellende Betriebsweise ermöglicht. Dabei soll zuverlässig vermieden werden, dass durch metallische Reibung hervorgerufene Beschädigungen an den zugeordneten Bauteilen in Kauf zu nehmen sind, vielmehr soll stets eine ausreichende Schmierung durch das zu übertragende Medium, und zwar auch benachbarter Bauteile gewährleistet sein. Über einen langen Zeitraum soll demnach ein störungsfreier Betrieb ermöglicht werden.

Gemäß der Erfindung wird dies bei einer Druckmittelübertragungseinrichtung der vorgenannten Gattung durch die technische Lehre des Anspruchs 1 erreicht. Zweckmäßig ist es hierbei, die beiden Ringscheiben auf ihren äußeren Stirnflächen jeweils mit einer an dem rotierenden zweiten Bauteil vorgesehenen Anlagefläche zusammenwirkenden Dichtflächen zu versehen, deren Abstand zueinander um das Maß der sich zwischen diesen und den Anlagenflächen des rotierenden zweiten Bauteils bildenden Dichtspalte kleiner bemessen ist.

Zur Bestimmung der Breite des zwischen den beiden Ringscheiben gebildeten Ringraumes ist es angezeigt, das zweite Bauteil mit einem radial nach außen abstehenden Ansatz zu versehen, an dem die beiden Ringscheiben seitlich axial abgestützt sind.

Jede der Ringscheiben sollte ferner mit einer zwischen diesen und dem zweiten Bauteil vorgesehenen Ringkammer versehen sein, wobei zur Begrenzung der Ringkammer das zweite Bauteil mit spiegelbildlich zueinander angeordneten Vorsprüngen auszugestalten ist, an denen und dem Ansatz die Ringscheiben abgestützt sind.

Sehr zweckmäßig ist es des Weiteren, die radialen Spalte zwischen den beiden Bauteilen und den diesen benachbarten Bauteilen, z.B. einer das zweite Bauteil tragende Hohlwelle und einer an diesem abgestützten Scheibe, in diese vorzugsweise nahe der Ringkammern umlaufende Dichtungen, vorzugsweise in Form von O-Ringen einzusetzen.

Die an die Zuführungsleitungen angeschlossenen Bolzen sollten lageorientiert an dem Gehäuse eingespannt sein, bei einer Lagerung der Ringscheiben auf zwei Bolzen sollten diese diametral zueinander in dem Gehäuse abgestützt sein.

Der zwischen den beiden Ringscheiben vorgesehenen Ringraum ist an die seitlich neben den Ringscheiben angeordneten Bauteile, wie Lager und Dichtungen, angeschlossen, indem zur Verbindung des Ringraumes mit den seitlich angeordneten Bauteilen in die beiden Ringscheiben ein Rohrstück eingesetzt ist, in das im Bereich des Ringraumes Ausnehmungen in Form von Schlitzen, Bohrungen oder dgl. eingearbeitet sind.

Das Rohrstück kann hierbei ein- oder beidseitig in dem ersten Bauteil benachbarten Bauteilen, vorzugsweise in in dem Gehäuse vorgesehene Bohrungen, drehtest gehalten werden, so dass das Rohrstück als Verdrehsicherung für die Ringscheiben dient.

Der Ringraum kann im Bereich einer Abflussöffnung der Zuführungseinrichtung mit einer an das Gehäuse angepassten und in dieses eingesetzten Verschlussstück ab gedichtet werden.

Das erste und das zweite Bauteil sowie das Gehäuse sind, um eine kompakte Baueinheit zu schaffen, zusammen mit den mit Zuführungskanälen für die Servo-Einrichtung versehenen Bauteilen zu einem Verteilerblock zusammengefasst, der seitlich an die Servo-Einrichtung anflanschbar ist.

Wird eine Druckmittelübertragungseinrichtung gemäß der Erfindung ausgebildet, indem das erste Bauteil aus zwei jeweils um die Spaltbreite eines Dichtspaltes auf Bolzen geringfügig axial verschiebbare Ringscheiben zusammengesetzt wird, die einen Ringraum einschließen, so ist es möglich, stets eine zufriedenstellende Druckmittelübertragung, ohne dass nennenswerte Verluste an dem zu übertragenden Medium in Kauf zu nehmen sind, sicherzustellen, und zwar zu einem Aggregat wie eine beidseitig beaufschlagbare Servo-Einrichtung. Auf diese Weise ist nicht nur ein großer Einsatzbereich gegeben, sondern es ist auch sichergestellt, dass an den zusammenwirkenden sowie benachbarten Bauteilen keine durch Reibung hervorgerufenen Beschädigungen auftreten. Die beiden Ringscheiben werden nämlich bei einer Druckmittelübertragung durch das Medium in einer Mittelstellung in einem Schwebezustand gehalten, so dass beiderseits der Ringscheiben Medium aus den zwischen den beiden Bauteilen vorgesehenen Ringkammern ausströmen kann. Auch wird in diesem Betriebszustand das Medium benachbarten Bauteilen, wie Lagern oder Dichtungen, zugeführt, um diese zu schmieren und zu kühlen. Eine zuverlässige Betriebsweise ist demnach trotzt des geringen baulichen Aufwandes stets sichergestellt.

In den Zeichnungen ist ein Ausführungsbeispiel einer gemäß der Erfindung ausgebildeten Druckmittelübertragungseinrichtung dargestellt und nachfolgend im Einzelnen erläutert. Hierbei zeigt
- Figur 1: die Übertragungseinrichtung, angebaut an eine doppelseitig beaufschlagbare Servo-Einrichtung, in einem Axialschnitt,
- Figuren 2 und 3: die Einrichtung nach Figur 1, jeweils in Halbschnitten, mit den Zuführungen zu den beiden Druckräumen,
- Figur 4: einen Schnitt nach der Linie IV-IV der Figur 1 und

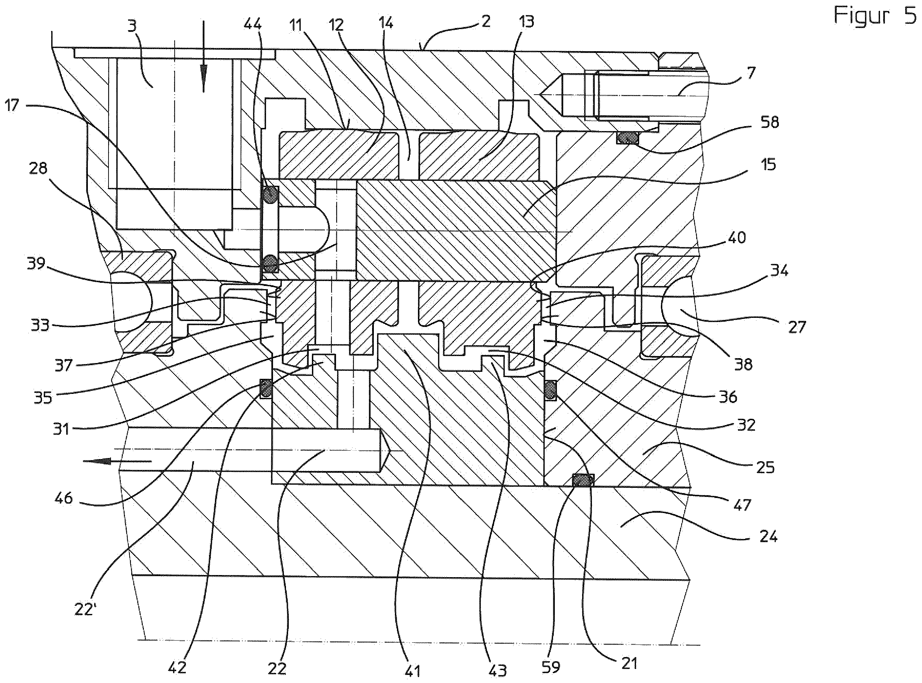

- Figur 5: einen Ausschnitt aus Figur 1, in Funktionsdarstellung bei einer Druckmittelübertragung, in einer vergrößerten Wiedergabe.

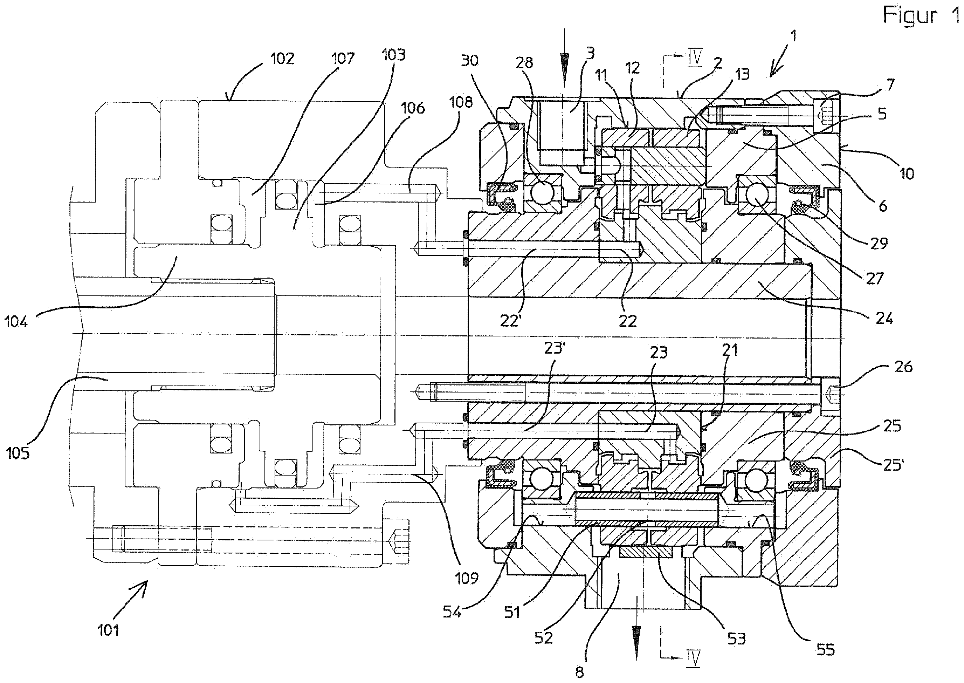

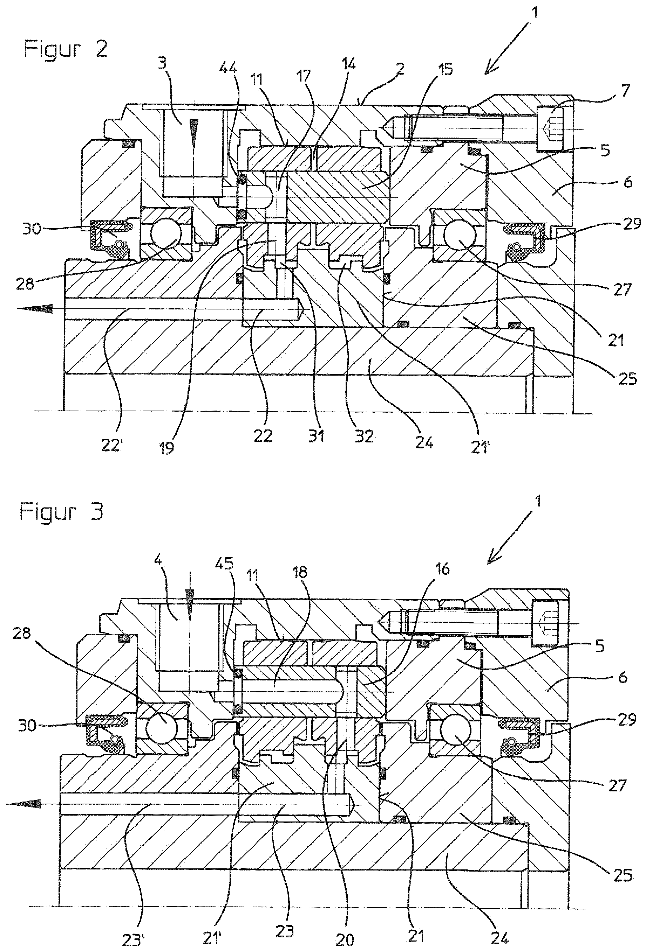

Die in den Figuren 1 bis 3 dargestellte und mit 1 bezeichnete Einrichtung dient zur Zuführung eines Mediums, beispielsweise von Hydraulikflüssigkeit, zu einer Servo-Einrichtung 101 und besteht im Wesentlichen aus einem in einem ortsfesten Gehäuse 2 abgestützten ersten Bauteil 11 sowie einem zweiten rotierend angetriebenen zweiten Bauteil 21, die zu einem Verteilerblock 10 zusammengebaut sind und der an der Servo-Einrichtung 101 angeflanscht ist. Die Servo-Einrichtung 101 besteht hierbei aus einem mehrteiligen Zylinder 102, in den ein axial verschiebbarer Verstellkolben 103 eingesetzt ist, dessen Kolbenstange 104 mit einer z.B. zur Betätigung eines Kraftspannfutters dienenden Zugstange 105 verbunden ist. Dem Verstellkolben 103 sind zwei Druckräume 106 bzw. 107 zugeordnet, denen über in den Zylinder 102 eingearbeitete Zuleitungen 108 bzw. 109 das Druckmedium aus dem Verteilerblock 10 wechselweise zugeführt werden kann.

Das erste Bauteil 11 besteht aus zwei Ringscheiben 12 und 13, die zwischen sich einen Ringraum 14 einschließen. Das zweite Bauteil 21 ist dagegen einteilig als Ring 21' gestaltet und auf einer Hohlwelle 24 angeordnet, die mittels Schrauben 26 an dem Zylinder 102 befestigt ist. Durch eine Scheibe 5 und einen Deckel 6, der durch Schrauben 7 an dem Gehäuse 2 befestigt ist, ist das erste Bauteil 11 in dem Gehäuse 2 verspannt, das zweite Bauteil 21 ist mittels Scheiben 25 und 25' sowie der Schrauben 26 auf der Hohlwelle 24 gehalten.

Die beiden Ringscheiben 12 und 13, die symmetrisch gestaltet und angeordnet sind, sind gemeinsam auf diametral zueinander angeordneten Bolzen 15 und 16 geringfügig axial verschiebbar gelagert, die an dem Gehäuse 2 und der Scheibe 5 abgestützt sind und in die ein an die in dem Gehäuse 2 vorgesehene Zuleitungen 3 bzw. 4 sowie ein in den Ringscheiben 12 und 13 und in dem zweiten Bauteil 21 vorgesehene Kanäle 19 und 22 bzw. 20 und 23 angeschlossene Kanäle 17 bzw. 18 eingearbeitet sind. Aus den Kanälen 22 bzw. 23 kann das Druckmittel über in der Hohlwelle 24 vorgesehene Kanäle 22' bzw. 23' den Druckräumen 106 oder 107 der Servo-Einrichtung 101 zugeführt werden.

Um stets eine ausreichende Schmierung in dem gesamten Verteilerblock 10 sicherzustellen, ist zwischen den beiden Ringscheiben 12 und 13 des ersten Bauteils 11 und dem zweiten Bauteil 21 jeweils eine Ringkammer 31 bzw. 32 vorgesehen, die von dem durchströmenden Medium beaufschlagt werden und die an Druckkammern 35 bzw. 36 angeschlossen sind. Den Druckkammern 35 und 36 sind Dichtspalte 33 bzw. 34 zugeordnet, die von an den Ringscheiben 12 und 13 angearbeiteten Dichtflächen 37 bzw. 38 und an der Hohlwelle 24 bzw. der Scheibe 25 angeformten Anlageflächen 39 bzw. 40 begrenzt sind. Findet eine Druckmittelübertragung statt, werden die symmetrisch zueinander ausgebildeten Ringscheiben 12 und 13 in den Ringkammern 31 oder 32 sowie den Druckräumen 35 und 36 und auch in dem Ringraum 14 beaufschlagt, so dass die Ringscheiben 12 oder 13 nach außen verschoben und die Dichtspalte 33 und 34 zwischen der Dichtfläche 37 und der Anlagefläche 39 bzw. der Dichtfläche 38 und der Anlagefläche 40 gebildet werden. Die Ringscheiben 12 und 13 werden dadurch in einem Schwebezustand gehalten, so dass zur Kühlung und Schmierung der seitlich neben dem ersten Bauteil 11 vorgesehenen Lager 27 und 28 sowie den Dichtringen 29 und 30 ebenfalls Druckmittel zugeführt wird.

Der Abstand zwischen den beiden Anlageflächen 39 und 40 ist hierbei derart gewählt, dass sich zwischen diesen und den Dichtflächen 37 und 38 im Betrieb beiderseits jeweils ein definierter Dichtspalt 33 und 34 einstellt, durch die die beiden Ringscheiben 12 und 13 in dem Schwebezustand gehalten werden. Auch die weiteren von dem Druckmittel beaufschlagten Flächen an den Ringscheiben 12 und 13 und den mit diesen zusammenwirkenden Bauteilen sind ebenfalls in der Weise auszulegen, dass sich der Gleichgewichtszustand einstellt.

Zur Bildung des Ringraumes 14 zwischen den beiden Ringscheiben 12 und 13 sowie den Ringkammern 31 und 32 sind an dem zweiten Bauteil 21 radial nach außen abstehende Ansätze 41 bzw. 42 und 43 angeformt, an denen die in entsprechender Weise gestalteten Ringscheiben 12 und 13 in Ausgangslage anliegen. Außerdem sind die in dem Gehäuse 2 eingespannten Bolzen 15 und 16 jeweils mittels O-RingDichtungen 44 bzw. 45 im Bereich des Anschlusses an die Zuleitungen 3 bzw. 4 abgedichtet.

Um auszuschließen, dass aus den Kanälen 22, 22' bzw. 23, 23' Medium in die Druckkammer 35 gelangt bzw. aus der Druckkammer 36 abströmen kann, sind in die Hohlwelle 24 bzw. die Scheibe 25 O-Ringdichtungen 46 und 47 eingesetzt. Die radialen Spalte zwischen der Hohlwelle 24 und dem zweiten Bauteil 21 bzw. zwischen diesem und der Scheibe 25 sind auf diese Weise verschlossen, und es tritt kein Druckmittelabfall in den Leitungen 22, 22' und 23, 23' bzw. der Druckkammer 36 ein.

Mittels weiterer in die Scheiben 5 und 25 eingesetzter Dichtungen 58 bzw. 59 ist der Innenraum des Verteilerblockes 10 zusätzlich druckdicht verschlossen, so dass kein Medium unkontrolliert abströmen kann.

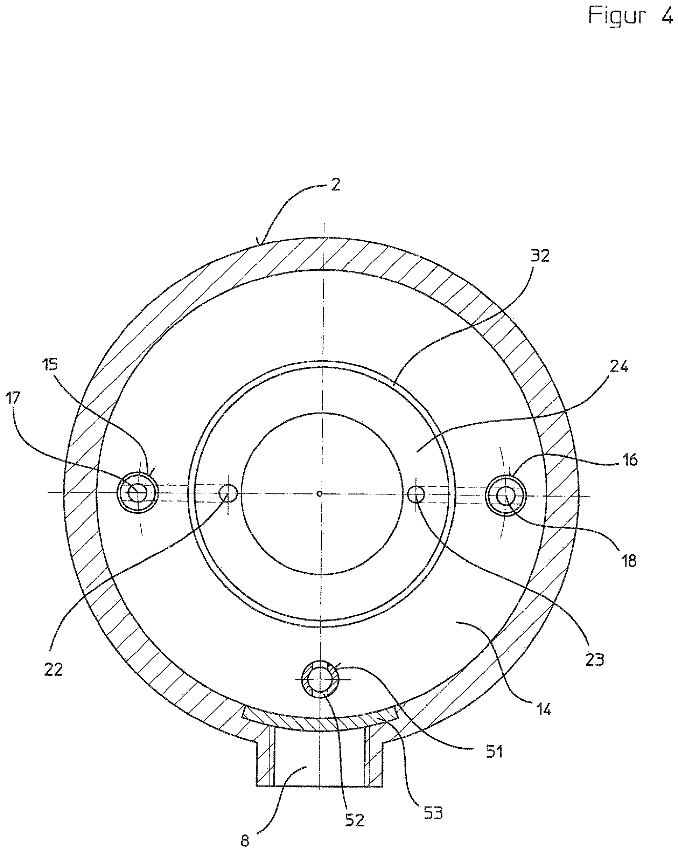

Damit das zur Schmierung und Kühlung vorgesehene Medium gezielt den Lagern 27, 28 und den Dichtringen 29, 30 zugeführt werden kann, ist in die Ringscheiben 12 und 13, wie dies insbesondere der Figur 4 zu entnehmen ist, ein Rohrstück 51 eingesetzt, das im Bereich des Ringraumes 14 mit Durchbrechungen 52 in Form von Längsschlitzen ausgestattet ist. Das Druckmedium kann somit mittels des Rohrstückes 51 aus dem Ringraum 14 den Lagern 27, 28 und den Dichtringen 29, 30 zugeführt werden. Und damit nur das zur Schmierung und Kühlung benutztes Medium aus dem Ringraum 14 über eine Auslassöffnung 8 aus dem Verteilerblock 10 abströmen kann, ist der Ringraum 14 durch ein in das Gehäuse 2 eingesetztes Verschlussstück 53, das an die Form des Gehäuses 2 angepasst ist, verschlossen.

Das Rohrstück 51 ist hierbei in Bohrungen 54 und 55, die in das Gehäuse 2 eingearbeitet sind, verdrehfest gehalten, so dass das Rohrstück 51 eine Verdrehsicherung für die beiden Ringscheiben 12 und 13 bildet. Eine Verdrehsicherung kann aber auch durch Stifte, die in das Gehäuse 2 eingesetzt sind, bewerkstelligt werden.

Eine störungsfreie Übertragung des Druckmediums aus dem Gehäuse 2 bzw. dem ersten Bauteil 11 in das zweite Bauteil 21 und von diesem in die Servo-Einrichtung 101 ist somit bei geringem durch Leckage bedingten Verlust gewährleistet.

## Patentansprüche

1. Einrichtung zur Zuführung eines Mediums zu einer Servo-Einrichtung (101), wobei die Einrichtung einen in einem ortsfesten Gehäuse (2) abgestützten ersten Bauteil (11) sowie einen zweiten rotierend angetriebenen zweiten Bauteil (21) umfasst, die zu einem Verteilerblock (10) zusammengebaut sind, der an der Servo-Einrichtung (101) anflanschbar ist, wobei das erste Bauteil (11) axial verschiebbar in dem Gehäuse (2) angeordnet ist und die Lage des ersten Bauteils (11) mittels seitlicher Dichtspalte (33, 34), die von einer zwischen den beiden Bauteilen (11, 21) vorgesehenen Ringkammer (31, 32) beeinflussbar sind, einstellbar ist, wobei das erste Bauteil (11) aus zwei symmetrisch zueinander ausgebildeten und mit einem geringen seitlichen Abstand zueinander angeordneten, einen Ringraum (14) einschließenden Ringscheiben (12, 13) zusammengesetzt ist, die jeweils an eine Zuführungszuleitung (3, 4) für das Medium angeschlossen sind und jeweils an einen der Druckräume (106, 107) der beidseitig beaufschlagbaren Servo-Einrichtung (101) anschließbar sind, wobei die beiden Ringscheiben (12, 13) verschiebbar auf mindestens zwei an dem Gehäuse (2) abgestützten Bolzen (15, 16) um die Spaltbreite eines Dichtspaltes (33, 34) verschiebbar gelagert sind und wobei in die Bolzen (15, 16) jeweils an die Zuführungsleitungen (3, 4) angeschlossene sowie an die Druckräume (106, 107) anschließbare Strömungskanäle (17, 18) eingearbeitet sind, wobei das zweite Bauteil (21) einteilig als Ring gestaltet und auf einer Hohlwelle (24) angeordnet ist, die mittels Schrauben (26) an einen Zylinder (102) der Servo-Einrichtung (101) befestigbar ist, wobei durch eine Scheibe (5) und einen Deckel (6), der durch Schrauben (7) an dem Gehäuse (2) befestigt ist, das erste Bauteil (11) in dem Gehäuse (2) abgestützt ist, wobei das zweite Bauteil (21) mittels Scheiben (25, 25') sowie der Schrauben (26) auf der Hohlwelle (24) gehalten ist, wobei um stets eine ausreichende Schmierung in dem gesamten Verteilerblock (10) sicherzustellen, zwischen den beiden Ringscheiben (12, 13) des ersten Bauteils (11) und dem zweiten Bauteil (21) jeweils eine Ringkammer (31, 32) vorgesehen ist, die von dem durchströmenden Medium beaufschlagt werden und die an Druckkammern (35, 36) angeschlossen sind, wobei den Druckkammern (35, 36) die Dichtspalte (33, 34) zugeordnet sind, die von an den Ringscheiben (12, 13) angearbeiteten Dichtflächen (37, 38) und an der Hohlwelle (24) bzw. der Scheibe (25) angeformten Anlageflächen (39, 40) begrenzt sind, wobei wenn eine Druckmittelübertragung stattfindet, die symmetrisch zueinander ausgebildeten Ringscheiben (12, 13) in den Ringkammern (31, 32) sowie den Druckkammern (35, 36) und auch in dem Ringraum (14) beaufschlagt werden, so dass die Ringscheiben (12, 13) nach außen verschoben und die Dichtspalte (33, 34) zwischen den Dichtflächen (37, 38) und den Anlagenflächen (39, 40) gebildet werden, wobei die Ringscheiben (12, 13) dadurch in einem Schwebezustand gehalten werden, so dass zur Kühlung und Schmierung von seitlich neben dem ersten Bauteil (11) vorgesehenen Lagern (27, 28) sowie Dichtringen (29, 30) ebenfalls Druckmittel zugeführt wird, wobei der zwischen den beiden Ringscheiben (12, 13) vorgesehene Ringraum (14) an die seitlich neben den Ringscheiben (12, 13) angeordnete Lager (27, 28) und Dichtungen (29, 30) angeschlossen ist, wobei zur Verbindung des Ringraumes (14) mit den seitlich angeordneten Lagern (27, 28) und Dichtungen (29, 30) in die beiden Ringscheiben (12, 13) ein Rohrstück (51) eingesetzt ist, in das im Bereich des Ringraums (14) eine oder mehrere Ausnehmungen (52) in Form von Schlitzen, Bohrungen oder dgl. eingearbeitet sind.

2. Druckmittelzuführungseinrichtung (1) nach Anspruch 1, **dadurch gekennzeichnet, dass** der Ringraum (14) im Bereich einer Abflussöffnung (8) der Zuführungseinrichtung (1) mit einem an das Gehäuse (2) angepassten und in dieses eingesetzten Verschlussstücks (53) abgedichtet ist.

3. Druckmittelzuführungseinrichtung (1) nach Anspruch 1 oder 2, **dadurch gekennzeichnet, dass** das Rohrstück (51) in Bohrungen (54, 55) verdrehfest gehalten ist, die in das Gehäuse (2) eingearbeitet sind, so dass das Rohrstück (51) eine Verdrehsicherung für die beiden Ringscheiben (12, 13) bildet, wobei die Bohrungen (54, 55) und im Bereich der Lager (27, 28) und Dichtringe (29, 30) münden und mit dem Ringraum (14) kommunizieren.

4. Druckmittelzuführungseinrichtung (1) nach Anspruch 1 oder 2, **dadurch gekennzeichnet, dass** eine Verdrehsicherung der beiden Ringscheiben (12, 14) durch Stifte, die in das Gehäuse (2) eingesetzt sind, gebildet ist.

## Claims

1. Device for supplying a medium to a servo device (101), wherein the device comprises a first component (11) supported in a fixed housing (2) and a second rotary-driven second component (21), which are assembled to form a distributor block (10) which can be flanged onto the servo device (101), wherein the first component (11) is arranged to be axially displaceable in the housing (2) and the position of the first component (11) is adjustable by means of lateral sealing gaps (33, 34), which can be influenced by an annular chamber (31, 32) provided between the two components (11, 21), wherein the first component (11) is composed of two annular discs (12, 13) surrounding an annular chamber (14) and which are designed to be symmetrical to one another and arranged at a small lateral distance from one another, which annular discs (12, 13) are connected respectively to a supply line (3, 4) for the medium and connectable respectively to one of the pressure chambers (106, 107) of the servo device (101) which can be supplied on both sides, wherein the two annular discs (12, 13) are mounted to be displaceable on at least two bolts (15, 16) supported on the housing (2) to be displaceable by the gap width of a sealing gap (33, 34) and wherein respectively flow channels (17, 18) connected to the supply lines (3, 4) and connectable to the pressure chambers (106, 107) are incorporated in the bolts (15, 16), wherein the second component (21) is designed in one piece as a ring and is arranged on a hollow shaft (24) which is attachable to a cylinder (102) of the servo device (101) by means of screws (26), wherein the first component (11) is supported in the housing (2) by a disc (5) and a cover (6), which is attached to the housing (2) by screws (7) wherein the second component (21) is retained on the hollow shaft (24) by means of discs (25, 25') and the screws (26), wherein in order to always ensure adequate lubrication in the whole distributor block (10), each annular chamber (31, 32), which are supplied by the through-flowing medium and which are connected to pressure chambers (35, 36), is provided between the two annular discs (12, 13) of the first component (11) and the second component (21), wherein the sealing gaps (33, 34), which are limited by sealing surfaces (37, 38) attached to the annular discs (12, 13) and support surfaces (39, 40) integrally moulded on the hollow shaft (24) or the disc (25), are assigned to the pressure chambers (35, 36), wherein if transfer of pressurised medium takes place, the annular discs (12, 13) which are designed to be symmetrical to one another are supplied in the annular chambers (31, 32) and the pressure chambers (35, 36) and also in the annular chamber (14), so that the annular discs (12, 13) are displaced outwards and the sealing gaps (33, 34) are formed between the sealing surfaces (37, 38) and the support surfaces (39, 40), wherein the annular discs (12, 13) are thus retained in a suspended state so that, for cooling and lubrication of bearings (27, 28) and sealing rings (29, 30) provided laterally next to the first component (11), pressurised medium is likewise supplied, wherein the annular chamber (14) provided between the two annular discs (12, 13) is connected to the bearings (27, 28) and seals (29, 30) arranged laterally next to the annular discs (12, 13), wherein to connect the annular chamber (14) with the laterally arranged bearings (27, 28) and seals (29, 30), a tube piece (51), in which one or more openings (52) in the form of slots, holes or the like are incorporated in the region of the annular chamber (14), is inserted in the two annular discs (12, 13).

2. Pressurised medium supply device (1) according to claim 1, **characterised in that** the annular chamber (14) is sealed in the region of a discharge opening (8) of the supply device (1) with a closure piece (53) adapted to the housing (2) and inserted into the latter.

3. Pressurised medium supply device (1) according to claim 1 or 2, **characterised in that** the tube piece (51) is retained to be resistant to rotation in holes (54, 55) which are incorporated in the housing (2) so that the tube piece (51) forms anti-rotation means for the two annular discs (12, 13), wherein the holes (54, 55) open in the region of the bearings (27, 28) and sealing rings (29, 30) and communicate with the annular chamber (14).

4. Pressurised medium supply device (1) according to claim 1 or 2, **characterised in that** anti-rotation means of the two annular discs (12, 14) is formed by pins which are inserted into the housing (2).

## Revendications

1. Dispositif pour alimenter un dispositif assisté (101) en fluide, le dispositif comprenant un premier composant (11) en appui dans un carter stationnaire (2), et un second composant (21) entraîné en rotation, qui sont assemblés pour former un collecteur (10) qui est apte à être fixé par bride au dispositif assisté (101), le premier composant (11) étant disposé mobile axialement dans le carter (2) et la position dudit premier composant (11) étant réglable à l'aide de jeux d'étanchéité latéraux (3, 34) qui sont aptes à être influencés par une chambre annulaire (31, 32) prévue entre les deux composants (11, 21), le premier composant (11) se composant de deux plaques annulaires (12, 13) qui sont symétriques, qui sont disposées avec un faible écartement latéral et qui définissent un espace annulaire (14), lesquelles plaques annulaires (12, 13) sont raccordées chacune à une conduite d'amenée (3, 4) pour le fluide et qui sont aptes à être raccordées à un espace de pression respectif (106, 107) du dispositif assisté (101) apte à être sollicité des deux côtés, les deux plaques annulaires (12, 13) étant montées sur au moins deux axes (15, 16) supportés sur le carter (2), de manière à pouvoir coulisser de la largeur d'un jeu d'étanchéité (33, 34), et des canaux d'écoulement (17, 18) raccordés aux conduites d'amenée (3, 4) respectives et aptes à être raccordés aux espaces de pression (106, 107) étant réalisés dans les axes (15, 16), le second composant (21) étant conçu d'une seule pièce comme une bague et étant disposé sur un arbre creux (24) qui est apte à être fixé à l'aide de vis (26) à un cylindre (102) du dispositif assisté (101), le premier composant (11) étant en appui dans le carter (2) grâce à une plaque (5) et à un couvercle (6) qui est fixé par des vis (7) au carter (2), le second composant (21) étant retenu sur l'arbre creux (24) à l'aide de plaques (25, 25') et des vis (26), une chambre annulaire (31, 32) qui est sollicitée par le fluide qui passe et qui est raccordée à une chambre de pression (35, 36) respective, étant prévue entre les deux plaques annulaires (12, 13) du premier composant (11) et le second composant (21), afin de garantir en permanence une lubrification suffisante dans tout le collecteur (10), les jeux d'étanchéité (33, 34) qui sont délimités par des surfaces d'étanchéité (37, 38) réalisées sur les plaques annulaires (12, 13) et par des surfaces d'application (39, 40) rapportées sur l'arbre creux (24) ou la plaque (25) étant associés aux chambres de pression (35, 36), quand un transfert de fluide sous pression a lieu les plaques annulaires (12, 13) symétriques étant sollicitées dans les chambres annulaires (31, 32) ainsi que dans les chambres de pression (35, 36), et aussi dans l'espace annulaire (14), de sorte que les plaques annulaires (12, 13) sont déplacées vers l'extérieur et les jeux d'étanchéité (33, 34) sont formés entre les surfaces d'étanchéité (37, 38) et les surfaces d'application (39, 40), les plaques annulaires (12, 13) étant ainsi maintenues dans un état de flottement, de sorte que du fluide sous pression est également amené pour le refroidissement et la lubrification de paliers (27, 28) prévus latéralement près du premier composant (11) et de bagues d'étanchéité (29, 30), l'espace annulaire (14) prévu entre les deux plaques annulaires (12, 13) étant raccordé aux paliers (27, 28) et joints d'étanchéité (29, 30) disposés latéralement près desdites plaques annulaires (12, 13), un élément tubulaire (51) dans lequel un ou plusieurs évidements (52) en forme de fentes, perçages etc. sont réalisés dans la zone de l'espace annulaire (14) étant introduit dans les deux plaques annulaires (12, 13) pour relier l'espace annulaire (14) aux paliers (27, 28) et joints d'étanchéité (29, 30) disposés latéralement.

2. Dispositif d'alimentation en fluide sous pression (1) selon la revendication 1, **caractérisé en ce que** l'espace annulaire (14) est rendu étanche, dans la zone d'une ouverture d'écoulement (8) du dispositif d'alimentation (1), avec un obturateur (53) qui est adapté au carter (2) et introduit dans celui-ci.

3. Dispositif d'alimentation en fluide sous pression (1) selon la revendication 1 ou 2, **caractérisé en ce que** l'élément tubulaire (51) est retenu, fixe en rotation, dans des perçages (54, 55) qui sont réalisés dans le carter (2), de sorte que ledit élément tubulaire (51) forme un mécanisme anti-rotation pour les deux plaques annulaires (12, 13), les perçages (54, 55) débouchant dans la zone des paliers (27, 28) et des bagues d'étanchéité (29, 30), et communiquant avec l'espace annulaire (14).

4. Dispositif d'alimentation en fluide sous pression (1) selon la revendication 1 ou 2, **caractérisé en ce qu'**un mécanisme anti-rotation des deux plaques annulaires (12, 14) est formé par des tiges qui sont introduites dans le carter (2).
